# EUROPÄISCHE PATENTSCHRIFT

(11) **EP 2 589 481 B1**
(45) Veröffentlichungstag und Bekanntmachung des Hinweises auf die Patenterteilung: **20.01.2016**
(21) Anmeldenummer: 11187934.2
(22) Anmeldetag: 04.11.2011
(51) Int. Cl.: B29C 47/12, B29C 47/92, B29C 47/06, B29C 49/00

(54) **Vorrichtung zur fortlaufenden Herstellung eines Verbundrohres mit Verbindungs-Muffe**
Device for continuously manufacturing a composite pipe with connection sleeve
Dispositif de fabrication continue d'un tuyau composite doté d'un manchon de raccordement

(43) Veröffentlichungstag der Anmeldung: 08.05.2013
(73) Patentinhaber: Hegler, Ralph Peter, 97688 Bad Kissingen (DE)
(72) Erfinder: Hegler, Ralph Peter, 97688 Bad Kissingen (DE)
(74) Vertreter: Rau, Schneck & Hübner Patentanwälte Rechtsanwälte PartGmbB

(56) Entgegenhaltungen:
- EP-A1- 1 612 030
- EP-A1- 2 103 412
- EP-A2- 0 563 575
- EP-A2- 0 995 579
- WO-A1-2005/009720

## Beschreibung

Die Erfindung betrifft eine Vorrichtung nach dem Oberbegriff des Anspruchs 1.

Eine derartige Vorrichtung ist aus der EP 2 103 412 A1 (entsprechend US 2009/0236032 A1) bekannt. Hierbei mündet in den Raum zwischen Außen-Düse und Innen-Düse ein Kanal zur Zuführung von Stützluft, wobei die Stützluft zuschaltbar und abschaltbar ist. Aus dem Bereich zwischen Außen-Düse und Innen-Düse mündet wiederum ein gesonderter Entlüftungs-Kanal aus, der ständig zur Atmosphäre offen ist.

Aus der EP 0 563 575 B1 (entsprechend US 5 320 797) ist eine Vorrichtung ähnlicher Gattung bekannt, bei der das Entlüften jeweils durch Öffnen eines in dem Kanal zur Zuführung von Stützluft angeordneten Magnetventils erfolgt, wobei die Zuführung von Stützluft unterbrochen wird.

Aus der EP 0 995 579 A2 ist eine Vorrichtung der allgemeinen Gattung bekannt, bei der zwischen der Innen-Düse und der Außen-Düse aus dem Spritzkopf ein Gaskanal ausmündet, der einerseits über ein Ventil an eine Druckgasquelle zum Einblasen von sogenannter Stützluft und andererseits an Atmosphäre anschließbar ist. Ein ständiges Entlüften des Zwischenraumes zwischen und Innen-Schlauch und Außen-Schlauch entsprechend der oben vorausgesetzten Gattung findet hierbei nicht statt.

Aus der EP 1 612 030 A1 ist eine mit der Vorrichtung nach der EP 0 995 579 A2 gleiche Vorrichtung bekannt.

Aus der WO 2005/009 720 A1 ist eine Vorrichtung zur Herstellung eines doppelwandigen thermoplastischen Rohres mit einer Rohrmuffe bekannt, bei der zwischen der Innen-Düse und der Außen-Düse ein Stützluft-Kanal aus dem Spritzkopf ausmündet, durch den ständig, also ohne jede Unterbrechung, Stützluft mit einem Druck oberhalb von Atmosphärendruck ausgeblasen wird. Eine Entlüftung findet hierüber nicht statt.

Die Ausgestaltung mit einer ständigen Verbindung zur Atmosphäre hat sich grundsätzlich als vorteilhaft bei der Herstellung von großen Verbundrohren aus Polyolefinen, also Polyethylen und/oder Polypropylen bewiesen. Unter großen Verbundrohren werden hierbei Rohre mit Nennweiten ≥ DN 250 verstanden, wobei die Verbundrohre einfache Verbundrohre und Verbundrohre mit doppellagiger Verbindungsmuffe umfassen.

Es hat sich aber herausgestellt, dass dieses System noch verbesserungsbedürftig ist.

Der Erfindung liegt daher die Aufgabe zu Grunde, eine Vorrichtung der eingangs vorausgesetzten Art dahingehend zu verbessern, dass die Steuerung des Luftdrucks im Raum zwischen Außen-Schlauch und Innen-Schlauch mit sehr einfachen Mitteln möglich ist.

Diese Aufgabe wird erfindungsgemäß bei einer Vorrichtung nach dem Oberbegriff des Anspruches 1 durch die Merkmale in dessen Kennzeichnungsteil gelöst. Durch den groß dimensionierten bzw. dimensionierbaren Stützluft- und Entlüftungs-Kanal ist es möglich, einen entlang der Formstrecke sich verändernden Luftvolumenbedarf zwischen den Schläuchen auf einfache Weise zu kompensieren. Insbesondere bei großen Rohren kommt dies zum Tragen, da bei der Ausformung der Wellenberge größere Stützluft-Volumina erforderlich sind, während bei der Ausformung der Wellentäler, wo der Innen-Schlauch mit dem Außen-Schlauch verschweißt wird, wenig bzw. gar keine Stützluft erforderlich ist. Es kann nicht nur Stützluft zugeführt werden, sondern auch abgeführt werden.

Besonders vorteilhaft ist die erfindungsgemäße Ausgestaltung, wenn gemäß Anspruch 2 vorgesehen ist, auch doppellagige Verbindungs-Muffen auf der Vorrichtung herzustellen. Hier ist es durch den erfindungsgemäß groß dimensionierten bzw. dimensionierbaren Stützluft- und Entlüftungs-Kanal möglich, einerseits ein schnelles Entlüften an die Atmosphäre andererseits aber auch ein schnelles Zuführen von Atmosphärenluft bei einer pulsierenden Aufweitung des Innenschlauchs zur Verbindungs-Muffe zu erreichen. Dies erfolgt dadurch, dass neben der Stützluft je nach Bedarf mehr oder weniger Umgebungsluft nachströmen kann. Dies ist ein wichtiger Effekt bei leicht schwankenden Werten des Teilvakuums an den Halbkokillen. Dies gilt für die Herstellung der doppellagigen Verbindungs-Muffe, und zwar insbesondere im Hinblick auf die Anforderungen an den Entlüftungsvorgang beim Übergang von der Muffenformung zurück auf die Herstellung des normal gewellten doppelwandigen Verbundrohres. Das System ist sehr stabil. Besondere Abdichtungsmaßnahmen im Bereich des Anfangs des Stützluft- und Entlüftungskanals sind nicht erforderlich, da das gesamte System nicht druckdicht sein muss und demzufolge auch nicht ist. Die Stützluft wird hierbei so bemessen, dass sie die Formgebung durch das Vakuumverfahren bereichsweise unterstützt, jedoch keinen dominierenden Einfluss auf die Formgebung, insbesondere während der Ausformung der doppellagigen Verbindungsmuffe, ausübt.

Die Unteransprüche geben vorteilhafte Weiterbildungen wider.

Weitere Einzelheiten, Vorteile und Merkmale ergeben sich aus der nachfolgenden Beschreibung von Ausführungsbeispielen anhand der Zeichnung. Es zeigt:
- Fig. 1: eine im Wesentlichen aus zwei Extrudern, einer Formmaschine und einer Nachkühlvorrichtung bestehende Anlage zur Herstellung von Verbundrohren mit Verbindungs-Muffen in Draufsicht in schematischer Darstellung,
- Fig. 2: einen Spritzkopf und das Einlaufende der Formmaschine im Horizontalschnitt,
- Fig. 3: einen Teilausschnitt aus Fig. 2 in gegenüber Fig. 2 vergrößertem Maßstab,
- Fig. 4: einen Querschnitt durch Fig. 2 entsprechend der Schnittlinie IV-IV in Fig. 2,
- Fig. 5: eine gegenüber Fig. 4 abgewandelte Querschnittsdarstellung,
- Fig. 6: einen Querschnitt durch Fig. III, entsprechend der Schnittlinie VI-VI in Fig. 3,
- Fig. 7: eine Fig. 2 entsprechende Darstellung eines abgewandelten Spritzkopfes und
- Fig. 8: eine vergrößerte Teildarstellung aus Fig. 7.

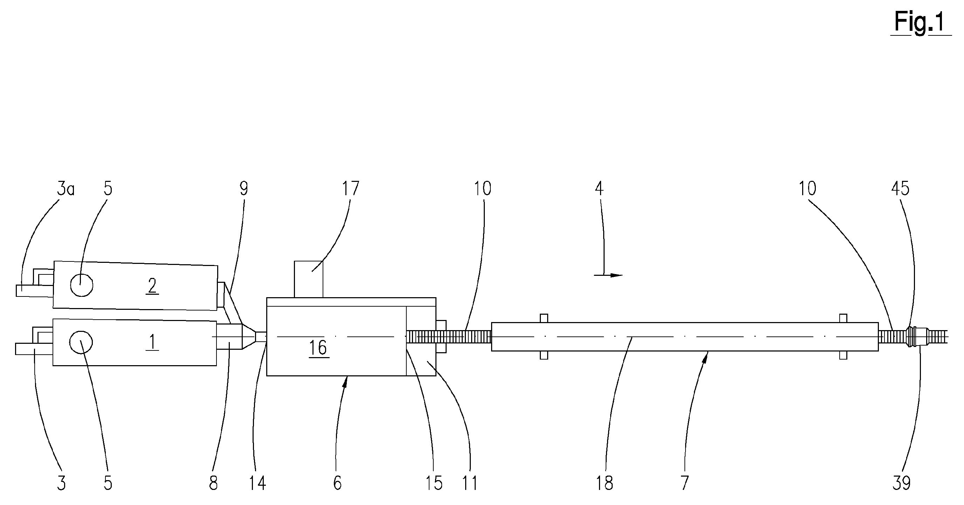

Die in Fig. 1 dargestellte Anlage zur Herstellung von Verbundrohren weist zwei Extruder 1, 2 auf. Diese werden jeweils von einem drehzahlregelbaren Antriebsmotor 3 bzw. 3a angetrieben, der - bezogen auf eine Förderrichtung 4 der gesamten Anlage - stromaufwärts vor den Zuführtrichtern 5 der Extruder 1, 2 vorgesehen ist.

Bezogen auf die Förderrichtung 4 stromabwärts von den Extrudern 1, 2 ist eine Formmaschine 6, ein so genannter Korrugator, angeordnet, dem wiederum eine Nachkühlvorrichtung 7 nachgeordnet ist. An einem fluchtend mit der Formmaschine 6 und der Nachkühlvorrichtung 7 angeordneten Extruder 1 ist ein Quer-Spritzkopf 8 also ein Extrusionswerkzeug angebracht, der in die Formmaschine 6 hineinragt. Der andere, seitlich dieses Extruders 1 angeordnete Extruder 2 ist über einen seitlich in den Quer-Spritzkopf 8 einmündenden Spritzkanal 9 mit dem Quer-Spritzkopf 8 verbunden. Wie schematisch in Fig. 1 angedeutet ist, wird in der Formmaschine 6 ein Verbundrohr 10 geformt, das in Förderrichtung 4 aus der Formmaschine 6 austritt und in der Nachkühlvorrichtung 7 abgekühlt wird. Hinter dieser Nachkühlvorrichtung 7 kann es dann in Stücke geeigneter Länge zerschnitten werden.

Die Formmaschine 6 ist in ihrem Aufbau bekannt und in der Praxis üblich. Sie ist beispielsweise in der EP 0 563 575B1 (entsprechend US-PS 5,320,797) beschrieben, worauf ausdrücklich verwiesen wird. Sie weist im Wesentlichen einen Maschinentisch 11 auf, auf dem Halbkokillen 12, 12a angeordnet sind. Die Halbkokillen 12, 12a werden auf dem Maschinentisch 11 in Förderrichtung 4 jeweils zu einem Kokillen-Paar 13 vereinigt und vom - bezogen auf die Förderrichtung 4 - stromaufwärtigen Einlaufende 14 zum stromabwärtigen Auslaufende 15 geführt, wobei wiederum in Förderrichtung 4 hintereinander folgende Kokillen-Paare 13 dicht an dicht liegen. Der Antrieb der auf einer Formstrecke 16 jeweils zu Kokillen-Paaren 13 zusammengeführten Halbkokillen 12, 12a erfolgt mittels eines Antriebsmotors 17. Der Transport der Halbkillen 12, 12a und der Kokillen-Paare 13 auf dem Maschinentisch 11 ist ausführlich in der EP 0 764 516 B1 (entsprechend US 5 693 347) dargestellt und beschrieben, worauf verwiesen werden darf.

Der Quer-Spritzkopf 8 weist zwei konzentrisch zu einer gemeinsamen Mittel-Längs-Achse 18 angeordnete Schmelzekanäle, nämlich einen inneren Schmelzekanal 19 und einen äußeren Schmelzekanal 20, auf, die - bezogen auf die Förderrichtung 4 - stromabwärts in einer Innen-Düse 21 bzw. einer Außen-Düse 22 enden. Der innere Schmelzekanal 19 ist an einen Spritzkanal 23 des fluchtend mit der Formmaschine 6 angeordneten Extruders 1 angeschlossen, wogegen der äußere Schmelzekanal 20 an den Spritzkanal 9 des anderen Extruders 2 angeschlossen ist. Zwischen der Innen-Düse 21 und der Außen-Düse 22 mündet aus dem Spritzkopf 8 ein ringzylindrischer und zur Achse 18 konzentrischer Stützluft- und Entlüftungs-Kanal 24 aus. Am - bezogen auf die Förderrichtung 4 - stromabwärtigen Ende des Spritzkopfes 8 ist an diesem ein Kalibrierdorn 25 angebracht, der ebenfalls konzentrisch zur Achse 18 verläuft.

Der Spritzkopf 8, also das Extrusionswerkzeug, ist vielteilig aufgebaut. Der innere Schmelzekanal 19 wird von einem Innen-Düsendorn 26 und einem Innen-Düsenmantel 27 begrenzt. Der äußere Schmelzekanal 20 wird von einem Außen-Düsendorn 28 und einem Außen-Düsenmantel 29 begrenzt, wobei die Beschreibung - bezogen auf die Achse 18 - von innen nach außen erfolgt ist. Zwischen dem Innen-Düsenmantel 27 und dem Außen-Düsendorn 28 ist der Stützluft- und Entlüftungs-Kanal 24 ausgebildet und zwar als zur Achse 18 konzentrischer, ringzylindrischer Kanal 24.

Auf dem Spritzkopf 8, also auf dessen Außen-Düsenmantel 29, ist - bezogen auf die Förderrichtung 4 - stromaufwärts der Außen-Düse 22 eine auswechselbar angebrachte, aus Halbschalen 30 gebildete, zylindrische Außenfläche 31 vorgesehen, zwischen denen und den Halbkokillen 12, 12a ein ringförmiger Dichtspalt 32 gebildet wird. Diese Ausgestaltung ist in der EP 11 184 779.4 im Einzelnen dargestellt und beschrieben, worauf verwiesen wird.

Die Halbkokillen 12, 12a weisen ringförmige Formausnehmungen 33 auf, die in regelmäßigen Abständen hintereinander angeordnet sind und die jeweils an Teilvakuum-Kanäle 34 angeschlossen sind. Beim Einlauf der Halbkokillen 12, 12a in die Formstrecke 16 gelangen die Teilvakuum-Kanäle 34 an nicht dargestellte, in der EP 11 184 779.4 dargestellte und beschriebene Teilvakuum-Versorgungsquellen, sodass die Formausnehmungen 33 mit Teilvakuum beaufschlagt werden.

Die vom Extruder 2 durch den Spritzkanal 9 dem Spritzkopf 8 zugeführte Kunststoff-Schmelze strömt durch den äußeren Schmelzekanal 20 zur Außen-Düse 22 und wird dort unter Formung eines Außen-Schlauchs 35 extrudiert. Aufgrund des Teilvakuums und aufgrund von durch den Stützluft- und Entlüftungs-Kanal 24 zugeführter Stützluft legt sich dieser Außen-Schlauch 35 unter Formung eines mit ringförmigen Wellenbergen 36 ausgebildeten Schlauchs in die Formausnehmungen 33. Aus dem Extruder 1 wird durch den Spritzkanal 23 dem Quer-Spritzkopf 8 KunststoffSchmelze zugeführt und strömt durch den inneren Schmelzekanal 19 zur Innen-Düse 21 und tritt dort als Innen-Schlauch 37 aus, der auf den Kalibrier-Dorn 25 gelangt. Dieser erweitert sich von der Innen-Düse 21 in Förderrichtung 4 leicht nach außen, bis der Innen-Schlauch 37 gegen die Wellentäler 38 des Außen-Schlauchs 35 gelangt und hier mit diesem verschweißt wird. Der Innen-Schlauch 37 und der Außen-Schlauch 35 bilden nach Abkühlung unter Erstarrung das Verbundrohr 10.

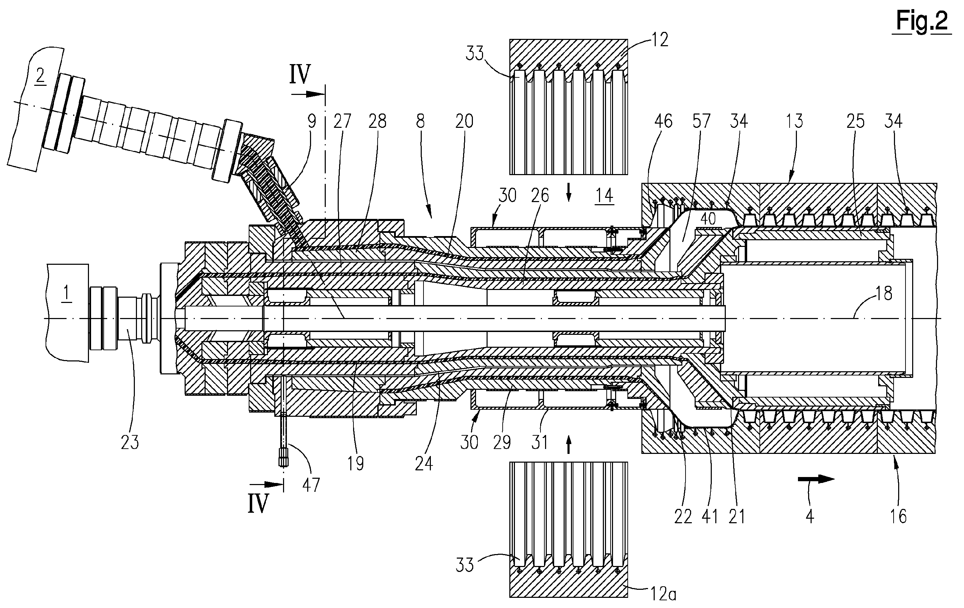

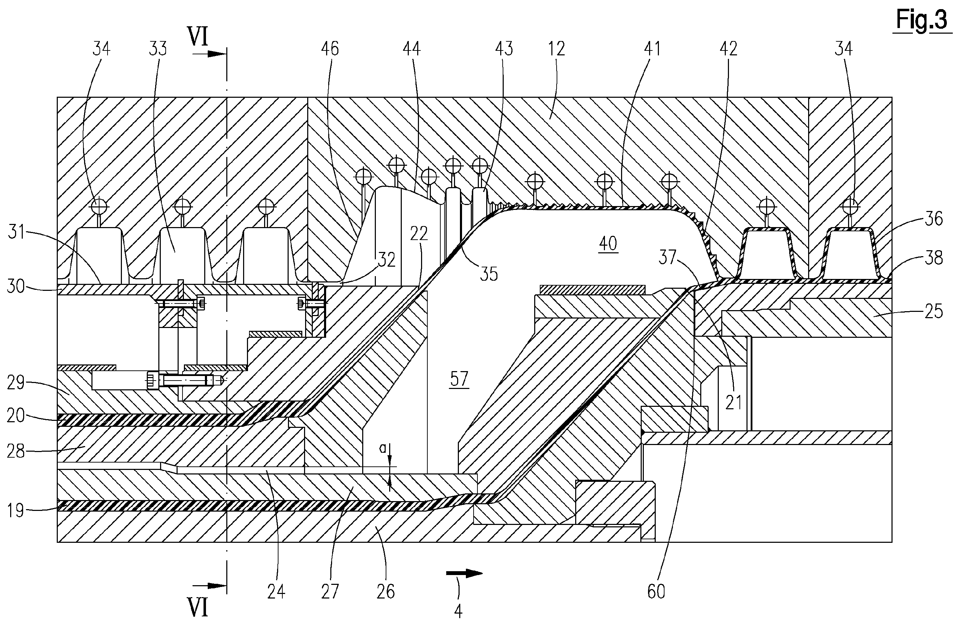

Wie insbesondere aus den Fig. 2 und 3 ersichtlich ist, sind die Halbkokillen 12, 12a so ausgebildet, dass jeweils in vorgegebenen Abständen innerhalb des endlos hergestellten Verbundrohres 10 Verbindungs-Muffen 39 ausgebildet werden. Hierzu ist in einem Paar von Halbkokillen 12, 12a eine Muffen-Ausnehmung 40 ausgebildet, die also eine im Wesentlichen glatte, zylindrische Wand 41 aufweist. Zwischen der Wand 41 der Muffen-Ausnehmung 40 und der in Förderrichtung 4 voreilenden Formausnehmung 33 ist eine Übergangs-Fläche 42 ausgebildet. An das - bezogen auf die Förderrichtung 4 - nacheilende Ende der Wand 41 der Muffen-Ausnehmung 40 schließen sich Umfangsrillen 43 zur Versteifung der Verbindungs-Muffe 39 und ein kegelstumpfförmiger Formabschnitt 44 an, in dem ein sich nach außen erweiterndes Einführende 45 der Muffe 39 ausgeformt wird. Daran schließt sich wiederum eine Übergangs-Fläche 46 an, die zur nächsten - in Förderrichtung 4 nacheilenden - Formausnehmung 33 führt.

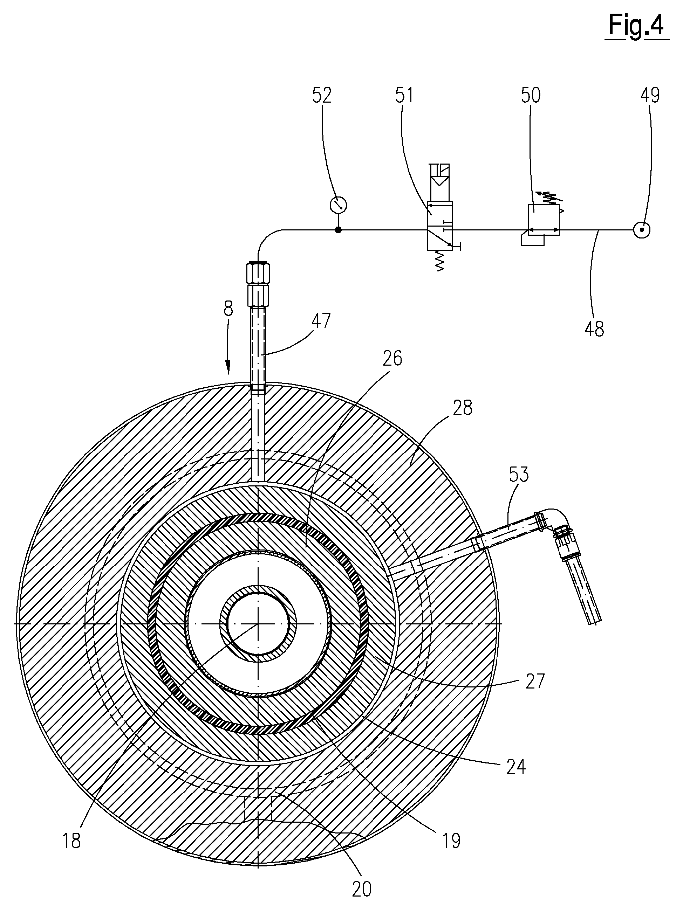

Der Stützluft- und Entlüftungs-Kanal 24 erstreckt sich - wie Fig. 2 entnehmbar ist - über einen wesentlichen Teil der Erstreckung des Spritzkopfes 8 in Richtung der Achse 18. Im Bereich des - bezogen auf die Förderrichtung 4 - stromaufwärtigen Endes des Spritzkopfes 8 mündet, wie insbesondere Fig. 2 und 4 entnehmbar ist, in den Stützluft- und Entlüftungs-Kanal 24 ein Stützluft-Zuführrohr 47 ein. Es ist über eine Stützluft-Leitung 48 mit einer Druckluftquelle 49 verbunden. In der Stützluft-Leitung 48 sind - in dieser Reihenfolge ausgehend von der Druckluftquelle 49 - ein manuell einstellbarer Druckregler 50, ein ansteuerbares Magnetventil 51 und ein Druck-Messgerät 52 angeordnet. Aus dem Stützluft- und Entlüftungs-Kanal 24 mündet eine ständig zur Atmosphäre hin offene Entlüftungs-Leitung 53 aus.

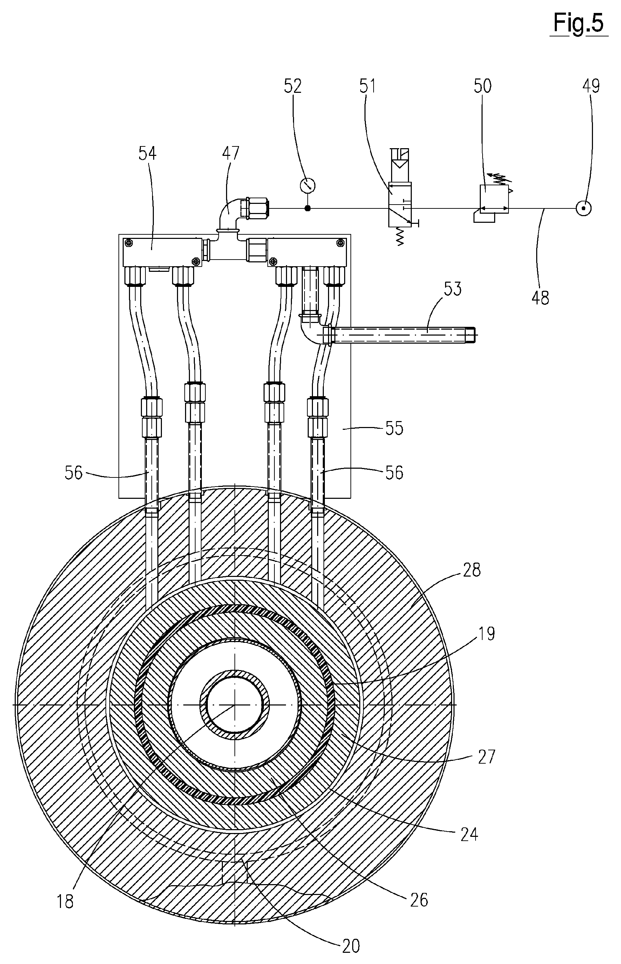

Fig. 5 zeigt eine Variante zu der Ausgestaltung nach Fig. 4. Hierbei ist ein Luft-Verteiler-Gehäuse 54 mittels eines Tragblechs 55 auf dem Spritzkopf 8 abgestützt. In das Luft-Verteiler-Gehäuse 54 mündet mittig die Stützluft-Leitung 48 ein. Es führen mehrere, im vorliegenden Fall vier Stützluft- und Entlüftungs-Leitungen 56 in den Stützluft- und Entlüftungs-Kanal 24. Aus dem Luft-Verteiler-Gehäuse mündet weiterhin eine zur Atmosphäre hin ständig offene Entlüftungs-Leitung 53 aus.

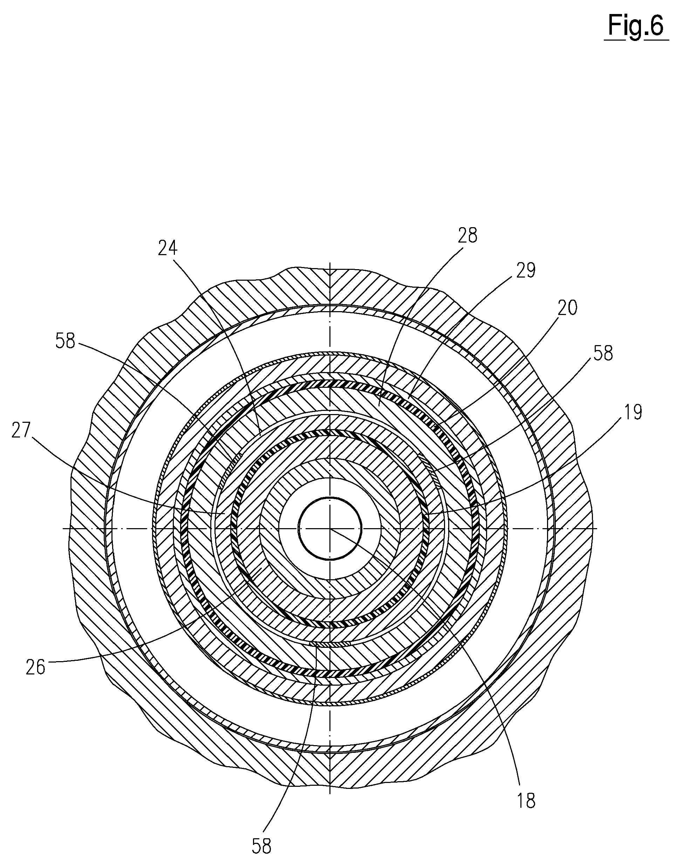

Wie Fig. 6 entnehmbar ist, sind im Stützluft- und Entlüftungs-Kanal 24 unmittelbar vor dessen Austritts-Raum 57 zwischen Außen-Düse 22 und Innen-Düse 21 mehrere im vorliegenden Beispiel um 120° gegeneinander versetzte Zentrierstücke 58 vorgesehen, um den Außen-Düsendorn 28 mit den radial außerhalb liegenden Teilen gegenüber dem Innen-Düsenmantel 27 und den innerhalb von diesem liegenden Teilen abzustützen und zu zentrieren. Diese Zentrierstücke 58 sind so zu dimensionieren, dass ein ausreichend großer freier Querschnitt im Stützluft- und Entlüftungs-Kanal 24, 24' verbleibt.

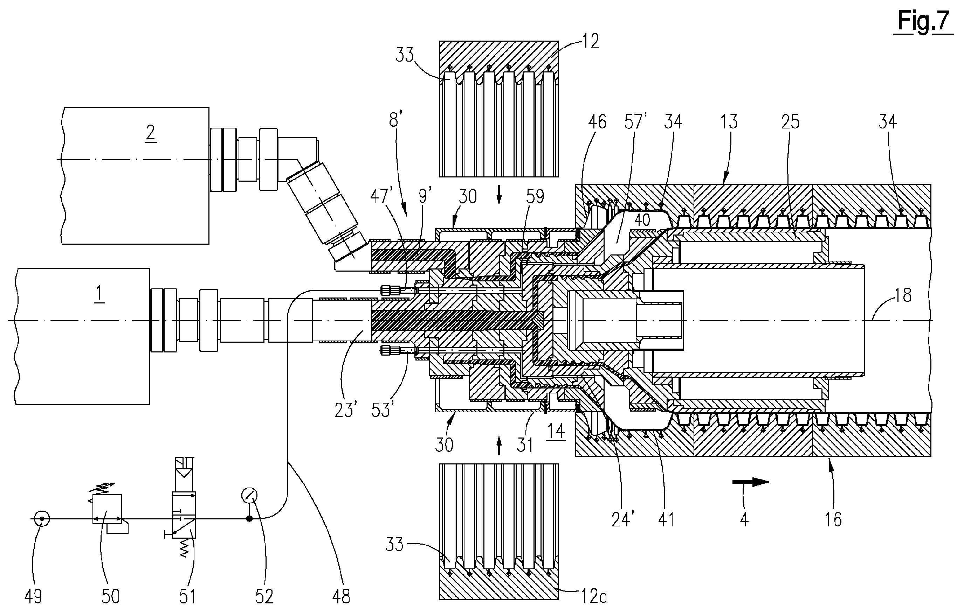

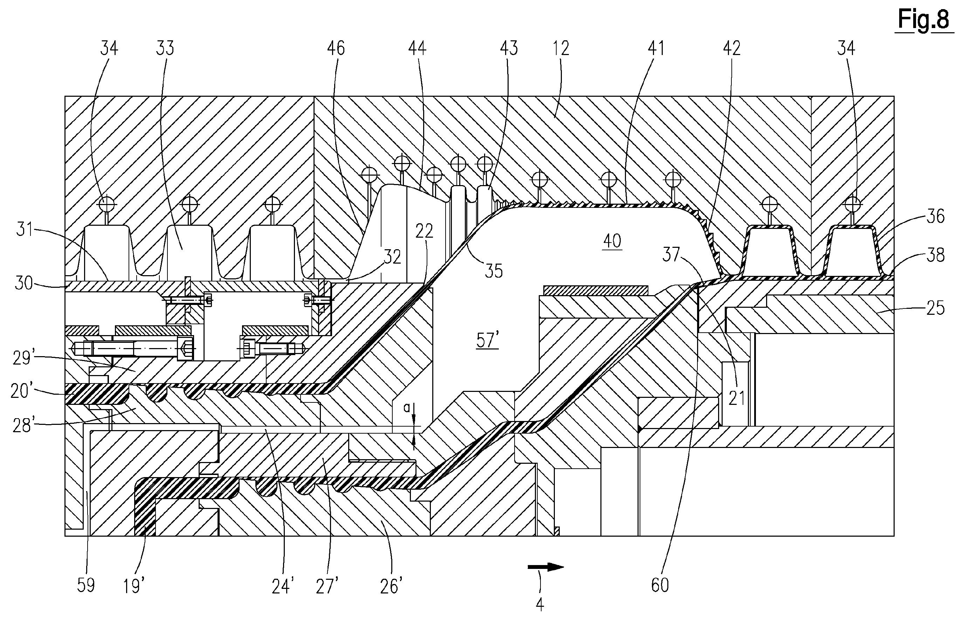

In den Fig. 7 und 8 ist ein abgewandelter Quer-Spritzkopf 8', also ein abgewandeltes Extrusions-Werkzeug, dargestellt, bei dem es sich um einen sogenannten Sternverteiler handelt. Diese Ausgestaltung wird insbesondere bei der Herstellung von Rohren mit sehr großem Durchmesser eingesetzt, da bei der konventionellen geschilderten Ausgestaltung der Spritzköpfe deren Gewicht zu groß wird. Ein solcher Quer-Spritzkopf 8', wie er in den Fig. 7 und 8 dargestellt ist, ist in der EP 2 116 352B1 im Detail dargestellt und beschrieben, worauf verwiesen werden darf. Im Übrigen werden mit den Teilen der bisherigen Beschreibung gleiche Teile mit gleichen Bezugsziffern bezeichnet. Funktionell gleiche aber konstruktiv andere Teile werden mit denselben Bezugsziffern mit einem hochgesetzten Strich bezeichnet, sodass eine detaillierte Beschreibung nicht notwendig ist.

Der Innen-Düsendorn 26', der Innen-Düsenmantel 27', der Außen-Düsendorn 28' und der Außen-Düsenmantel 29' sind jeweils aus mehreren Teilen zusammengesetzt. Im Bereich vor dem Austritts-Raum 57' ist der Stützluft- und Entlüftungs-Kanal 24' ringzylindrisch konzentrisch zur Achse 18 ausgebildet und angeordnet.

Mindestens ein Stützluft-Zuführrohr 47' verläuft parallel zur Achse durch einen Teil des Quer-Spritzkopfes 8', und zwar zwischen dem inneren Schmelzekanal 19' und dem äußeren Schmelzekanal 20'. Entsprechend angeordnet ist mindestens eine Entlüftungs-Leitung 53'. Das Stützluft-Zuführrohr 47' und die Entlüftungs-Leitung 53' enden innerhalb des Quer-Spritzkopfes 8' in einem ringscheibenförmigen Verteiler-Kanal 59, aus dem der Stützluft- und Entlüftungs-Kanal 24' ausmündet.

Die Mindest-Spaltweite a des ringzylindrischen Stützluft- und EntlüftungsKanals 24 bzw. 24' ist ausreichend groß zu bemessen. Es gilt: a ≥ 2,0 mm.

Während der Produktion des Verbundrohres 10 wird Teilvakuum auf die Teilvakuum-Kanäle 34 aufgebracht, also sowohl auf die Formausnehmungen 33 als auch auf die Muffen-Ausnehmung 40. Während der Herstellung des normalen Verbundrohres 10 mit Wellenbergen 36 wird das Magnetventil 51 geöffnet, sodass von der Druckluftquelle 49 Druckluft mit einem am Druckregler 50 eingestellten Druck über den Stützluft- und Entlüftungs-Kanal 24 bzw. 24' in den Raum 57 zwischen dem Innen-Schlauch 37 und dem Außen-Schlauch 35 eingegeben wird. Da der Kanal 24 bzw. 24' ständig zur Atmosphäre geöffnet ist, stellt sich ein in der Praxis ermittelbarer Stützluft-Druck ein, der deutlich niedriger als der Vordruck in der Stützluft-Leitung 48 ist. Durch das Teilvakuum in den Formausnehmungen 33 und die leichte Unterstützung durch die Stützluft wird der Außen-Schlauch 35 an die Wand der Formausnehmung 33 angelegt und somit der Außen-schlauch ausgeformt. Die jeweils bei der Ausformung eines Wellenberges 36 bzw. eines Wellentales 38 im Außen-Schlauch 35 schwankenden Luftvolumina der Stützluft werden über den Stützluft- und Entlüftungs-Kanal 24 bzw. 24' kompensiert bzw. ausgepuffert. Drucksteuerungseinrichtungen für die Stützluft sind also nicht erforderlich. Die Stützluftzufuhr bleibt aufrecht erhalten, bis die Übergangs-Fläche 42 der Muffen-Ausnehmung 40 die Innen-Düse 21 erreicht, wie es in den Fig. 2 und 3 bzw. 7 und 8 dargestellt ist. Bis zu diesem Zeitpunkt wird der Außen-Schlauch 35 durch das Teilvakuum unterstützt durch den leichten Überdruck der Stützluft an die Wand 41 der Muffen-Ausnehmung 40 angelegt. Dies gilt somit für die Ausformung des Außen-Schlauches 35 zum Verbundrohr 10 und zumindest auch bereichsweise für die Ausformung des Außen-Schlauches 35 zur Verbindungs-Muffe 39. In dem erwähnten in Fig. 2 und 3 bzw. 7 und 8 dargestellten Zeitpunkt wird das Magnetventil 51 geschlossen, sodass der Raum 57 bzw. 57' über den Stützluft- und Entlüftungs-Kanal 24, 24' entlüftet wird. Gleichzeitig wird über einen zusätzlichen, benachbart zur Innen-Düse 21 angeordneten Gaskanal 60 ein Innendruck auf den Innen-Schlauch 37 gegeben, sodass der Innen-Schlauch 37 an den bereits, zumindest teilweise, an der Wand 41 der Muffen-Ausnehmung 40 anliegenden Außen-Schlauch 35 angelegt wird. Da der Raum 57 bzw. 57' ständig mit der Atmosphäre verbunden ist und keine Stützluft mehr zugeführt wird, herrscht im Raum 57 bzw. 57' Atmosphärendruck. Die in ihm vorhandene Luft wird mit der Aufweitung des Innen-Schlauches 37 bis zur Anlage am Außen-Schlauch 35 aus dem Raum 57 durch den Stützluft- und Entlüftungs-Kanal 24 bzw. 24' verdrängt, also an die Atmosphäre abgegeben.

Der Druckabfall, also der Druckausgleich, von dem leichten Überdruck auf Atmosphärendruck beim Schließen des Magnetventils 51 erfolgt kurzzeitig, d.h. nahezu angenähert schlagartig; das Entlüften des Raums 57 erstreckt sich über den gesamten Zeitraum der Aufweitung des Innen-Schlauches 37 zur Verbindungs-Muffe 39.

## Patentansprüche

1. Vorrichtung zur fortlaufenden Herstellung eines in einer Förderrichtung (4) aus einem glatten Innen-Rohr und einem mit diesem verschweißten, mit Wellenbergen (36) versehenen Außen-Rohr bestehenden Verbundrohres (10) und einer Mittel-Längs-Achse (18)
- wobei mit ringförmigen Formausnehmungen (33) versehene, sich auf einer Formstrecke (16) jeweils paarweise zu einer Form mit einer Mittel-Längs-Achse (18) ergänzende Halbkokillen (12, 12a) im Kreislauf und in die Förderrichtung (4) geführt angeordnet sind,
- wobei die Formausnehmungen (33) an in den Halbkokillen (12, 12a) ausgebildete Teilvakuum-Kanäle (34) angeschlossen sind,
- wobei der Formstrecke (16) ein Spritzkopf (8, 8') mindestens eines Extruders (1, 2) vorgeordnet ist,
- wobei der Spritzkopf (8, 8') mit einer Außen-Düse (22) zur Extrusion eines Außen-Schlauches (35) und in Förderrichtung (4) nachgeordnet mit einer Innen-Düse (21) zur Extrusion eines Innen-Schlauches (37) und an seinem in Förderrichtung (4) stromabwärts liegenden Ende mit einem Kalibrierdorn (25) versehen ist,
- wobei zwischen Außen-Düse (22) und Innen-Düse (21) aus dem Spritzkopf (8) mindestens ein Stützluft-Kanal (24, 24') ausmündet,
**dadurch gekennzeichnet,**
**dass** der Stützluft-Kanal als ständig zur Atmosphäre offener, zumindest benachbart zum Bereich zwischen Innen-Düse (21) und Außen-Düse (22) ringzylindrischer und zur Mittel-Längs-Achse (18) konzentrischer Stützluft- und Entlüftungs-Kanal (24, 24') ausgebildet ist.

2. Vorrichtung nach Anspruch 1, **dadurch gekennzeichnet,**
**dass** zwischen Innen-Düse (21) und Kalibrierdorn (25) mindestens ein zusätzlicher Gas-Kanal (60) aus dem Spritzkopf (8) ausmündet,
**dass** mindestens ein Paar Halbkokillen (12, 12a) mit einer Muffen-Ausnehmung (40) versehen ist, und
**dass** die Muffen-Ausnehmung (40) durch eine in Förderrichtung (4) voreilende Übergangs-Fläche (42) begrenzt ist.

3. Vorrichtung nach Anspruch 1 oder 2, **dadurch gekennzeichnet,**
**dass** der Stützluft- und Entlüftungs-Kanal (24) sich über einen wesentlichen Teil der Länge des Spritzkopfes (8) erstreckt.

4. Vorrichtung nach einem der Ansprüche 1 bis 3, **dadurch gekennzeichnet,**
**dass** der Stützluft- und Entlüftungs-Kanal (24, 24') eine Spaltweite a aufweist, für die gilt: a ≥ 2,0 mm.

5. Vorrichtung nach einem der Ansprüche 1 bis 4, **dadurch gekennzeichnet,**
**dass** der Stützluft- und Entlüftungs-Kanal (24, 24') an mindestens ein Stützluft-Zuführrohr (47, 47') angeschlossen ist.

6. Vorrichtung nach einem der Ansprüche 1 bis 5, **dadurch gekennzeichnet,**
**dass** der Stützluft- und Entlüftungs-Kanal (24, 24') an mindestens eine Stützluft-Leitung (48) angeschlossen ist, die an eine Druckluftquelle (49) angeschlossen ist.

7. Vorrichtung nach einem der Ansprüche 1 bis 6, **dadurch gekennzeichnet,**
**dass** dem Stützluft- und Entlüftungs-Kanal (24, 24') ein Druckregler (50), ein Magnetventil (51) und ein Druck-Messgerät (52) vorgeordnet sind.

8. Vorrichtung nach einem der Ansprüche 1 bis 7, **dadurch gekennzeichnet,**
**dass** aus dem Stützluft- und Entlüftungs-Kanal (24, 24') eine ständig zur Atmosphäre offene Entlüftungs-Leitung (53, 53') ausmündet.

9. Vorrichtung nach einem der Ansprüche 1 bis 7, **dadurch gekennzeichnet,**
**dass** dem Stützluft- und Entlüftungs-Kanal (24) ein Luft-Verteiler-Gehäuse (54) vorgeordnet ist, in das eine Stützluft-Leitung (48) einmündet und aus dem eine Entlüftungs-Leitung (53) ausmündet und mit mehreren Stützluft- und Entlüftungs-Leitungen (56) mit dem Stützluft- und Entlüftungs-Kanal (24) verbunden ist.

## Claims

1. Apparatus for the continuous production of a twin wall pipe (10) consisting in a conveying direction (4) of a smooth internal pipe and an external pipe welded thereto and provided with corrugations (36), and a centre longitudinal axis (18)
- wherein mould block halves (12, 12a) provided with annular mould recesses (33), supplementing one another in pairs in each case on a molding section (16) to form a mould with a centre longitudinal axis (18), are arranged in the circuit and guided in the conveying direction (4)
- wherein the mould recesses (33) are connected to partial vacuum channels (34) formed in the mould block halves (12, 12a),
- wherein a pipe head (8, 8') of at least one extruder (1, 2) is arranged upstream of the molding section (16),
- wherein the pipe head (8, 8a) is provided with an external nozzle (22) for the extrusion of an external hose (35) and, downstream in the conveying direction (4), with an internal nozzle (21) for the extrusion of an internal hose (37) and, at its end located downstream in the conveying direction (4), with a calibrating mandrel (25),
- wherein at least one support air channel (24, 24') opens out of the pipe head (8) between the external nozzle (22) and the internal nozzle (21)
**characterized in that**
the support air channel is configured as a support air and venting channel (24, 24'), which is constantly open to the atmosphere, is annular-cylindrical at least adjacent to the region between the internal nozzle (21) and the external nozzle (22) and is concentric with respect to the centre longitudinal axis (18).

2. Apparatus according to claim 1, **characterized in that** at least one additional gas channel (60) opens out of the pipe head (8) between the internal nozzle (21) and the calibrating mandrel (25)
**in that** at least one pair of mould block halves (12, 12') is provided with a socket recess (40), and
**in that** the socket recess (40) is limited by a transition face (42), which is upstream in the conveying direction (4).

3. Apparatus according to claim 1 or 2, **characterized in that** the support air and venting channel (24) extends over a substantial part of the length of the pipe head (8).

4. Apparatus according to any one of claims 1 to 3, **characterized in that** the support air and venting channel (24, 24') has a gap width a, to which there applies: a ≥ 2.0 mm.

5. Apparatus according to any one of claims 1 to 4, **characterized in that** the support air and venting channel (24, 24') is connected to at least one support air supply pipe (47, 47').

6. Apparatus according to any one of claims 1 to 5, **characterized in that** the support air and venting channel (24, 24') is connected to at least one support air line (48), which is connected to a compressed air source (49).

7. Apparatus according to any one of claims 1 to 6, **characterized in that** a pressure regulator (50), a solenoid valve (51) and a pressure measuring device (52) are arranged upstream of the support air and venting channel (24, 24').

8. Apparatus according to any one of claims 1 to 7, **characterized in that** a venting line (53, 53'), which is constantly open to the atmosphere, opens out from the support air and venting channel (24, 24').

9. Apparatus according to any one of claims 1 to 7, **characterized in that** arranged upstream of the support air and venting channel (24) is an air distributor housing (54), into which a support air line (48) opens and from which a venting line (53) opens out, and which is connected by a plurality of support air and venting lines (56) to the support air and venting channel (24).

## Revendications

1. Dispositif de fabrication continue d'un tuyau composite (10) composé dans un sens de transport (4) d'un tube intérieur lisse et d'un tube extérieur doté de sommets d'ondes (36) soudé à celui-ci, et d'un axe médian longitudinal (18)
- des moitiés de coquilles (12, 12a) dotées d'évidements de moule annulaires (33), se complétant sur une voie de moule (16) respectivement par paire pour former un moule avec un axe médian longitudinal (18) étant agencées en circulation et par guidage dans le sens de transport (4),
- les évidements de moule (33) étant raccordés aux canaux de vide partiel (34) réalisés dans les moitiés de coquilles (12, 12a),
- une tête d'injection (8, 8') d'au moins une extrudeuse (1, 2) étant agencée en amont de la voie de moule (16),
- la tête d'injection (8, 8') étant dotée d'une buse extérieure (22) pour l'extrusion d'un tuyau extérieur (35) et en aval dans le sens de transport (4), d'une buse intérieure (21) pour l'extrusion d'un tuyau intérieur (37) et sur son extrémité se trouvant en aval dans le sens de transport (4), d'un mandrin de calibrage (25),
- au moins un canal d'air de soutien (24, 24') débouchant de la tête d'injection (8) entre la buse extérieure (22) et la buse intérieure (21),
**caractérisé en ce**
**que** le canal d'air de soutien est réalisé comme un canal d'air de soutien et de ventilation (24, 24') concentrique à l'axe médian longitudinal (18) et cylindrique et annulaire au moins de manière contiguë à la zone entre la buse intérieure (21) et la buse extérieure (22), ouvert en permanence vers l'atmosphère.

2. Dispositif selon la revendication 1, **caractérisé en ce**
**qu'**au moins un canal de gaz supplémentaire (60) débouche de la tête d'injection (8) entre la buse intérieure (21) et le mandrin de calibrage (25),
**qu'**au moins une paire de moitiés de coquilles (12, 12a) est pourvue d'un évidement de manchon (40) et
**que** l'évidement de manchon (40) est délimité par une surface de passage (42) en avant dans le sens de transport (4).

3. Dispositif selon la revendication 1 ou 2, **caractérisé en ce**
**que** le canal d'air frais et de ventilation (24) s'étend sur une partie essentielle de la longueur de la tête d'injection (8).

4. Dispositif selon l'une quelconque des revendications 1 à 3, **caractérisé en ce**
**que** le canal d'air frais et de ventilation (24, 24') présente une largeur de fente a, pour laquelle il s'applique : a ≥ 2 mm.

5. Dispositif selon l'une quelconque des revendications 1 à 4, **caractérisé en ce**
**que** le canal d'air frais et de ventilation (24, 24') est raccordé à au moins un tube d'amenée d'air de soutien (47, 47').

6. Dispositif selon l'une quelconque des revendications 1 à 5, **caractérisé en ce**
**que** le canal d'air de soutien et de ventilation (24, 24') est raccordé à au moins une conduite d'air de soutien (48) qui est raccordée à une source d'air comprimé (49).

7. Dispositif selon l'une quelconque des revendications 1 à 6, **caractérisé en ce**
**qu'**un régulateur de pression (50), une soupape magnétique (51) et un appareil de mesure de pression (52) sont agencés avant le canal d'air de soutien et de ventilation (24, 24').

8. Dispositif selon l'une quelconque des revendications 1 à 7, **caractérisé en ce**
**qu'**une conduite de ventilation (53, 53') ouverte en permanence vers l'atmosphère débouche du canal d'air de soutien et de ventilation (24, 24').

9. Dispositif selon l'une quelconque des revendications 1 à 7, **caractérisé en ce**
**qu'**un boîtier distributeur d'air (54) est agencé avant le canal d'air de soutien et de ventilation (24), dans lequel une conduite d'air de soutien (48) débouche et duquel une conduite de ventilation (53) débouche et est relié avec plusieurs conduites d'air de soutien et de ventilation (56) au canal d'air de soutien et de ventilation (24).
